# EUROPEAN PATENT APPLICATION

(11) **EP 4 838 085 A1**
(43) Date of publication of application: **11.11.2026**
(21) Application number: 25175076.6
(22) Date of filing: 08.05.2025
(51) Int. Cl.: F03D 1/00, F03D 80/60, F03D 80/80

(54) **ARRANGEMENT FOR A WIND TURBINE HAVING A NACELLE AND A NACELLE ASSEMBLY**

(71) Applicant: Nordex Energy SE & Co. KG, 22419 Hamburg (DE)
(72) Inventor: Wackrow, Torsten, 22419 Hamburg (DE)
(74) Representative: Epping - Hermann - Fischer

(57) **Abstract**

The disclosure relates to an arrangement (300) for a wind turbine (100) having a nacelle (106).

The arrangement comprising:
- a support structure (224) configured to be attached to a trailing end (254) of the nacelle (106) opposite to a rotor (108) of the wind turbine (100), and
- at least one of a cooling module (302) and a sensing module (304) configured to be supported by the support structure (224).

The disclosure further relates to a nacelle assembly with the arrangement (300).

## Description

The disclosure relates to an arrangement for a wind turbine having a nacelle comprising at least one of a cooling module and a sensing module, and a nacelle assembly comprising the arrangement.

Wind turbines are widely known from the prior art and are used to convert wind energy into electrical energy.

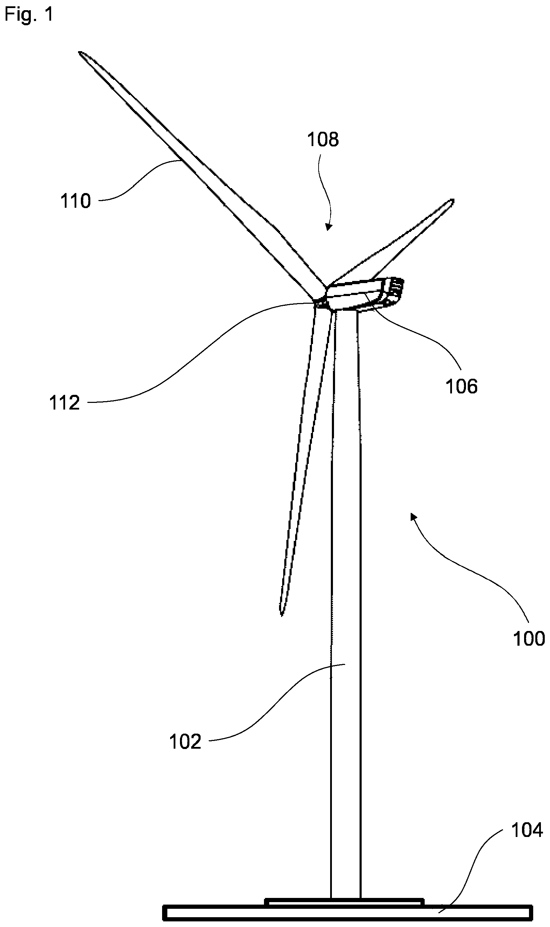

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator (not shown) which is coupled to a rotor 108 via a rotor shaft (not shown). The rotor 108 comprises one or more (wind turbine) rotor blades 110, which are movably arranged on a rotor hub 112.

During operation, the rotor 108 is set in rotation by an air flow, for example, by the wind interacting with the blades 110 resulting in forces getting exerted on the blades 110. This rotational movement is transmitted to the generator via the transmission supporting the rotor shaft, with or without a gearbox. The generator converts the mechanical energy of the rotor 108 into electrical energy.

Electrical equipment, e.g., the generator and a transformer, may be usually placed close to the rotor 108 and inside the nacelle 106 to keep mechanical and electrical transmission losses low and to protect the equipment from environmental influences.

Wind turbine electrical components, especially the generator and the transformer module, are being pushed to the limits as wind turbines are being installed in areas with high ambient temperatures or as the power output is being increased to generate more energy.

Therefore, an ever-increasing cooling capacity with enhanced efficiency needs to be provided to prevent excessive temperatures from being reached in the generator, the transformer module, the converter, and the nacelle as a whole. Such requirements are typically met through coolers to be installed on the nacelle roof, wherein a fluid, also referred to as a coolant, for example water, is cooled by means of an airflow crossing the cooler. Such a cooler installed on the nacelle of a wind turbine is, for example, disclosed in EP 3 680 481 A1.

To realize a good cooling effect, the cooler should be exposed to free flow of wind, but this also exposes the cooler to high winds during storms such as hurricanes and typhoons, and hence to high structural loads. By exposing the cooler to high winds, the cooler may be damaged, leading to high repair and maintenance costs, as well as to susceptibility of heat generating components getting overheated as result of malfunction of the cooler. As the power production per wind turbine increases, so does the required cooling capacity. Higher cooling capacity implies requirement of coolers with increased surface area or improved surface conditions which can be bulky, expensive, etc. Further, such coolers are complicated to service as they are not readily accessible or they are accessible in a potentially unsafe manner to the maintenance personnel. Lack of flexibility to adjust orientation of such coolers for maintenance, inspection, etc., is also a challenge. Therefore, there is a need for a still higher cooling capacity and a cooler installation that is able to withstand high winds.

It is an object of the disclosure to provide an improved solution.

According to a first aspect of the disclosure, an arrangement for a wind turbine having a nacelle is disclosed. The arrangement comprises a support structure configured to be attached to a trailing end of the nacelle opposite to a rotor of the wind turbine, and at least one of a cooling module and sensing module configured to be supported by the support structure.

"Trailing end" or "rear end" of the nacelle means the opposite side of the nacelle at which the rotor of the wind turbine is located.

Trailing end or rear end also refers to a location adjacent to and/or adjoining a rear wall of the nacelle which is opposite to the front end (adjacent to the front wall of the nacelle) where the wind turbine rotor is located. Thus, trailing end or rear end may not be visible when the nacelle is viewed from the front end or the front wall, i.e., from the rotor side.

Thus, the support structure attached to the trailing end is at least partly concealed when the nacelle is viewed from the front end or the front wall, i.e., from the rotor side.

Furthermore, the support structure attached to the trailing end is characteristically located below and at a distance from the roof (or the top face) of the nacelle.

Several advantages may be attained by arranging the arrangement of the present disclosure on a support structure which is configured to be attached to the trailing end of a nacelle. For achieving a higher cooling capacity, the cooling module could be moved or adjusted to a position where the air directly flows over the cooling module such that the heat transfer may be optimized.

Another advantage is that if high winds or storms are detected, for example, by the sensing module, the cooling module can be protected by moving the cooling module into a position behind the nacelle where it is protected from storms and high winds.

The arrangement comprising the sensing module and/or the cooling module supported on the support structure has the advantage that either one or both the modules may be folded to a compact state during a non-operating condition, e.g., transport, and unfolded to an extended state for operation. The whole arrangement, including the support structure, the arrangement comprising the cooling module and/or the sensing module, can be mounted/assembled in a facility and shipped as a whole arrangement to the installation site where the wind turbine has to be installed. There may not be a need for workers to distinctly install the cooling module or the sensing module on the wind turbine at the installation site. Only the whole arrangement is mounted to the rear end of the nacelle, and the cooling module and/or the sensing module is/are actuated to its operating position or non-operating position depending on the case.

According to a embodiment, the support structure comprises a support member configured to extend beyond the trailing end of the nacelle, in particular along a lengthwise direction of the nacelle. This has the advantage that the support member can serve as a support for the cooling module and also for the sensing module.

Further, according to an embodiment, the cooling module comprises at least one cooling panel supported by the support member such that the at least one cooling panel is movable between a first position and a second position. In particular, the cooling panel is at least one of pivotable about an axis perpendicular to the lengthwise direction of the nacelle, and slidable relative to the lengthwise direction of the nacelle.

According to an embodiment, the first position is an operating position of the cooling module, wherein, in the first position, the at least one cooling panel extends at an angle, in particular perpendicular, relative to the lengthwise direction, in particular in a widthwise direction, and away from at least one of the nacelle and the support member. This allows the air to flow optimally over the cooling panel in the operating position.

Away from at least one of the nacelle and the support member refers to an orientation of the cooling panel where it is spread outwards, e.g., in lateral direction away from the walls of the nacelle, i.e., side walls, top and bottom walls, as well as front and rear walls of the nacelle.

According to an embodiment, the second position is a non-operating position of the cooling module, wherein in the second position, the at least one cooling panel is located above the support member. The second position, for example, facilitates transport of the arrangement to the installation site, or allows inspection/maintenance when the sensors detect high winds with the need for protection of the cooling panels.

Thus, in the second position, the at least one cooling panel may extend upwards from the support member, for example, at right angle to a plane of the support member. In this position, the cooling panel also lies adjacent to the rear wall of the nacelle, for example, parallel or substantially parallel to the plane of the rear wall of the nacelle.

Non-operating position of the cooling module may correspond to a non-operating condition which may include, but not limited to, storage, transportation, lifting from the ground during installation, lowering from the tower onto ground for replacement, a state of shutdown during emergency conditions, inspection, repair, maintenance, etc.

Operating position of the cooling module may correspond to an operating condition which being a normal operating state of a wind turbine. In a general sense, an operating condition is characterized by an installed condition of the wind turbine on top of the tower with the components, systems, or subassemblies being arranged in place relative to the nacelle and operating harmoniously to generate power i.e., transformation of available wind energy into mechanical power and finally into electrical power.

In the present disclosure, the following notations are used to denote spatial orientations, positions, extensions, etc.,: 'above'/'top'/'upper' and
'beneath'/'bottom'/'lower'/'underneath' refer to or is referenced to a vertical direction with respect to ground. The vertical direction corresponds essentially to the length direction of the tower (height considered from the foundation till the head of tower flange on which the nacelle is supported) which is inherently vertical. The height dimension of the nacelle is referenced to the vertical direction, i.e., height of an entire nacelle is a dimension of the nacelle measured from its bottom to the top in the vertical direction.

'Front'/'fore' and 'rear'/'aft' /'trailing' are referenced to a lengthwise direction or a longitudinal direction which extends horizontally, i.e., essentially perpendicular to the vertical direction defined above. Lengthwise or longitudinal direction can alternately be attributed as the length direction of a main shaft of the wind turbine to which the rotor is attached. In still another case, the lengthwise direction or the longitudinal direction may be referenced to a linear direction from the nose cone of the rotor (spinner) to the rear extremity of the nacelle farthest away from the rotor.

Length of the nacelle refers to a dimension of the nacelle in the lengthwise direction. Front side (or front end or fore end, all referred to interchangeably in the disclosure) of the nacelle is the side at which the rotor is attached. The rear side (or rear end or trailing end, all referred to interchangeably in the disclosure) of the nacelle is opposite to the front side of the nacelle in the length direction.

A 'width' or 'widthwise direction' or 'lateral direction' of the nacelle is the third direction which extends in a direction perpendicular to both the lengthwise or longitudinal (horizontal) direction and the vertical direction (height) of the nacelle.

Considering the example of an upwind wind turbine, a "fore end" of the nacelle is the windward direction of the nacelle, while "rear end" or "trailing end" is opposite to the fore end and is a leeward direction of the nacelle, and therefore the opposite side to the rotor. In the example of downwind wind turbine, windward and leeward directions are reversed in comparison to upwind wind turbine.

According to an embodiment, the support structure further comprises at least one post, in particular at least two posts, supported on the support member at a first end, and a support element attached to the at least one post at a second end opposite to the first end. These features allow the cooling module and/or sensing module to be mounted to the posts and/or the support element.

An optional railing structure may be arranged on the support member. The railing structure arranged on the support member provides safety to the maintenance workers when they are working on the support member. The railing structure may also serve other purposes, e.g., as support for suspending cables, ropes, etc.

According to an embodiment, the sensing module is mounted to one of the support element and the support member.

The sensing module, for example, comprising one or more sensors, is movable between an operating position and a non-operating position.

According to an embodiment of the disclosure, in the operating position of the sensing module, the sensing module extends above a top face of the nacelle, and in the non-operating position of the sensing module, the sensing module is accessible, in particular reachable to a person.

Non-operating position of the sensing module may correspond to a non-operating condition which may include, but not limited to, storage, transportation, lifting from the ground during installation, lowering from the tower onto ground for replacement, a state of shutdown during emergency conditions, inspection, repair, maintenance, etc.

Operating position of the sensing module may correspond to an operating condition which being a normal operating state of a wind turbine. In a general sense, an operating condition is characterized by an installed condition of the wind turbine on top of the tower with the components, systems, or subassemblies being arranged in place relative to the nacelle and operating harmoniously to generate power i.e., transformation of available wind energy into mechanical power and finally into electrical power.

According to an example, in the non-operating position, the sensing module may be oriented downwards away from the top face of the nacelle, and towards the support member, such that the sensing module is within reach of the personnel present on the support member.

The non-operating position allows the sensing module to be, e.g., transported to the installation site together with the support structure and the cooling module. The orientation or extension of the sensing module in the non-operating position renders the arrangement compact which is essential to meet transport regulations of a country. Besides, in the non-operating position, safety of the sensing module may be ensured against possibility of accidental collision, etc. By moving the sensors from the non-operating position to the operating position, the need for further installation work at the installation site is avoided.

According to an embodiment, the support structure is configured to support an additional nacelle module, wherein the additional nacelle module is configured to be fixed below the support structure.

The additional nacelle module may accommodate a component, e.g., a transformer. A transformer generates a lot of heat and, by positioning it below the support structure, it is located outside the nacelle and closer to the cooling module.

Thus, according to an exemplary configuration, the support structure supports the arrangement of the present disclosure on top and/or the additional nacelle module at its bottom.

According to another embodiment, the arrangement comprises an actuator configured to adjust at least one of a position and an angle of the at least one cooling panel relative to the nacelle.

For example, the actuator may adjust the angle of the cooling panel relative to a side wall of the nacelle such that air flowing adjacent and in contact with the side wall may be incident on the cooling panel at different angles (based on adjustment by the actuator) that optimizes cooling, i.e., by heat transfer.

By employing the actuator, not only the cooling capacity of the cooling module is regulated by way of adjusting the angle between the cooling panel and the sidewall of the nacelle, but also the cooling panel can be actuated to a non-operating position or the second position e.g., during safety protocols or emergency situations.

According to another embodiment, the arrangement comprises an extension member.

For example, the extension member may be a platform that may be attached to the support structure and the extension member is configured to be deployed in a widthwise direction of the nacelle. In the deployed position, the at least one cooling panel may be inspected, repaired, replaced, etc., while the at least one cooling panel remains in the first position or substantially in the first position, without having to move it to the second position.

Thus, according to some exemplary embodiments, the first position may be both operating and non-operating positions of the cooling module.

Together with the railing structure, the extension member and the support member provides workers with a comfortable and safe working area and there is preferably a direct access to the nacelle, e.g., via side walls.

According to a second aspect of the disclosure, a nacelle assembly for a wind turbine is disclosed. The nacelle assembly comprises a first nacelle module comprising a first supporting frame, and a second nacelle module comprising a second supporting frame, wherein the first nacelle module and the second nacelle module are separate modules. The nacelle assembly further comprises an arrangement as described above, and further a third nacelle module attached to the support structure of the arrangement and located outside the first nacelle module and the second nacelle module and adjacent to the trailing end of the nacelle. In an operational state of the wind turbine, the second nacelle module is attached beneath the first nacelle module and to the first nacelle module.

This nacelle assembly, according to one configuration, allows each module, i.e., the first nacelle module, the second nacelle module, third nacelle module and the arrangement to be transported to the installation site separately and mounted together at the installation site for operation. This enables larger wind turbines to be designed, especially larger nacelles, as the modules are transported separately.

This nacelle assembly, according to another configuration, allows one or more modules out of the first nacelle module, the second nacelle module, third nacelle module, and the arrangement to be transported to the installation site in combinations. Thereafter, all of them are mounted or assembled together at the installation site for operation.

An example of one such combination is the third nacelle module attached to the arrangement of the present disclosure, where this combination may be transported, lifted, etc., as one module. In such a case, the support structure of the arrangement is a common sub-assembly to both the third nacelle module and the cooling and/or sensing module.

Another example such a combination is the third nacelle module attached to the second nacelle module, both of which may be transported, lifted, etc., as one module.

Any such combinations may be realized.

According to some embodiments, particularly with respect to the nacelle assembly comprising the first and second nacelle modules, the third nacelle module is interchangeably referred to as the "additional nacelle module" described earlier.

According to an embodiment, the third nacelle module is arranged behind the second nacelle module, such that the arrangement in one of the positions is at least partly behind and adjacent to the first nacelle module. By this arrangement, when the first and the second nacelle modules are attached (one below the other), the third nacelle module and the arrangement are already in designated positions rendering them ready for connections and subsequent operation.

According to another embodiment, the nacelle assembly has a slightly different configuration, in that: the cooling module is mounted to one of the first supporting frame and the second supporting frame such that the cooling module can be moved between the first position and the second position. Further, the sensing module is mounted to the first supporting frame such that the sensing module can be moved between the operating position and the non-operating position.

By this embodiment, the first supporting frame and/or the second supporting frame may be used to directly support the sensing module and/or cooling module.

According to a further embodiment, the first nacelle module is dimensioned to accommodate, at least partly, a transmission assembly and an electric generator of the wind turbine, and the second nacelle module is dimensioned to accommodate at least one other component, in particular an electrical component of the wind turbine, e.g., a converter.

Further advantages, features and further developments are set out by the following exemplary embodiments, which are explained in conjunction with the accompanying Figures. The same or similar elements or elements acting in the same way are provided with the same reference numerals in the following Figures, even if they belong to different embodiments.
Figure 1 shows main components of a wind turbine;
Figure 2 shows, in a side view, a support assembly supporting a transmission assembly, a generator and a nacelle module of the wind turbine;
Figure 3 shows, in a side view, the arrangement according to a first embodiment of the present disclosure supported at the trailing end of a nacelle;
Figure 4 shows a magnified view of a portion of Figure 3 in which the sensing module is moved to a non-operating position;
Figure 5 shows a perspective view of the arrangement of Figure 3 in which the cooling module and the sensing module are in operating position;
Figure 6 shows a perspective view of the arrangement of Figure 3 in which the cooling module and the sensing module are in non-operating position;
Figures 7 and 8 show perspective view and rear view respectively of the arrangement according to second embodiment of the present disclosure in which the cooling module and the sensing module are in operating position;
Figure 9 shows a perspective view of the arrangement illustrated in Figures 7 and 8 in which the cooling module is in the non-operating position, and the sensing module is in the operating position;
Figure 10 shows the arrangement of Figure 9 along with a third nacelle module, as viewed from the trailing side of the nacelle;
Figure 11 shows a perspective view of the arrangement of Figure 10 along with a portion of the nacelle assembly;
Figure 12 shows the arrangement of Figure 10 in which both the cooling module and the sensing module are in the non-operating position; and
Figure 13 shows a side view of a part of the nacelle with an exemplary cooling and sensing module attached to a supporting frame, according to a third embodiment of the present disclosure.

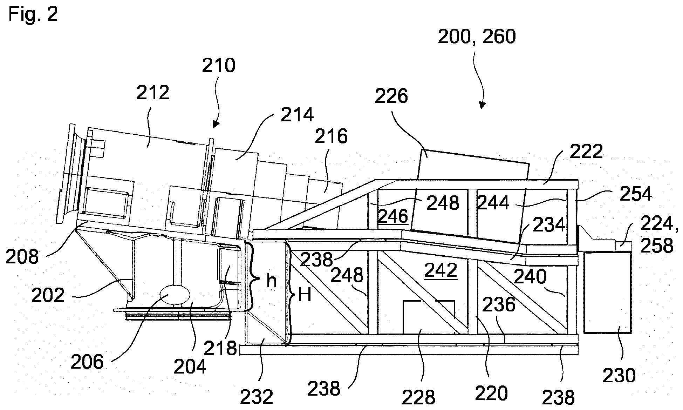

Figure 2 shows, in a side view, an assembly 200 (also referred to as support assembly) for supporting components arranged inside a nacelle 106 of a wind turbine 100. The support assembly 200 includes a main frame 202 and a supporting frame 260.

The main frame 202 is designed to be mounted on top of a tower 102 of a wind turbine 100. The main frame 202 comprises an exemplary closed wall 204 and an opening 206 in the closed wall for access by service personnel. The top of the main frame 202 comprises an inclined planar surface 208 for supporting a transmission assembly 210.

The supporting frame 260 may be composed of two or more frames or structures attached together, **e.g.,** a first supporting frame 222 and a second supporting frame 220 as shown in Figure 2.

Alternately, the supporting frame 260 may be a unitary structure, for example, a platform, or a pair of beams extending parallel in the lengthwise direction and interconnected by cross beams or matrix of cross-members, or a single, composite framework providing one, two or more floors for positioning components at different floor levels, and so on.

The transmission assembly 210 comprises a main shaft (not shown), a main bearing unit 212, a gearbox 214, and a portion 216 of the gearbox 214 directed towards a generator 226 for connection and power transmission. The main frame 202 comprises a main frame connecting structure 218 extending from the rear end of the main frame 202. This main frame connecting structure 218 has a certain height h.

Attached to the main frame 202 is the second supporting frame 220 supporting the first supporting frame 222 on top. The first supporting frame 222 is the frame of a first nacelle module 252 and the second supporting frame 220 supporting the first supporting frame 222 on top is the frame of a second nacelle module 250.

Attached to the rear side of the first supporting frame 222 is a support structure 224. The first supporting frame 222 is structured to support a generator 226. The second supporting frame 220 is structured to support other components 228, e.g., a cabinet and/or a converter.

In an alternate configuration, the support structure 224 may be attached to the second supporting frame 220, or an intersection (junction or interface) between the first and the second supporting frames 222, 220.

The support structure 224 supports a third nacelle module 230 (or additional nacelle module as the context requires), for example, in a suspended manner below the support structure 224, and behind the rear end of the second nacelle module 250. The third nacelle module 230 therefore is located outside the second nacelle module 250 as well as the first nacelle module 252. A component, e.g., a transformer may be housed inside the third nacelle module 230.

The second supporting frame 220 comprises a connecting portion 232 with a height H. The connecting portion 232 is attached to the main frame 202 and the height h of the main frame 202 on the side where the connecting portion 232 is attached may be smaller than the height H of the connecting portion 232. The connecting portion 232 is attached to the main frame connecting structure 218 of the main frame 202. The main frame connecting structure 218 is a reinforced extension of the main frame 202 which supports a gearbox 214, and also through the connecting portion 232 the second supporting frame 220, the first supporting frame 222, the support structure 224, and all components attached thereto.

The second supporting frame 220 comprises an upper supporting portion 234 and a lower supporting portion 236. The lower supporting portion 236 is arranged below the upper supporting portion 234.

The second supporting frame 220 is connected with the first supporting frame 222 by connection means 238 provided at the upper supporting portion 234 .

The second supporting frame 220 comprises a pair of side frames 240, and the pair of side frames 240 together with the upper supporting portion 234 and the lower supporting portion 236 circumscribe at least a second enclosure 242 of the nacelle.

The first supporting frame 222 comprises a pair of side frames 244, and the pair of side frames 244 together with a base of the first supporting frame 222 circumscribe at least a first enclosure 246 of the nacelle.

The pair of side frames 240, 244, for example, comprise interconnected beams 248.

The second enclosure 242 is bound by the second nacelle module 250 and the first enclosure 246 is bound by the first nacelle module 252. The housing of the nacelle modules 250 and 252 is not shown in Figure 2. The second nacelle module 250 and the first nacelle module 252 are separate modules which can be transported to the installation site of the wind turbine separately and are mounted together by the connection means 238 at the installation site.

According to an alternate configuration, the nacelle 106 may be formed as a single nacelle module having a single enclosure defined or circumscribed by a unitary supporting frame 260 inside it.

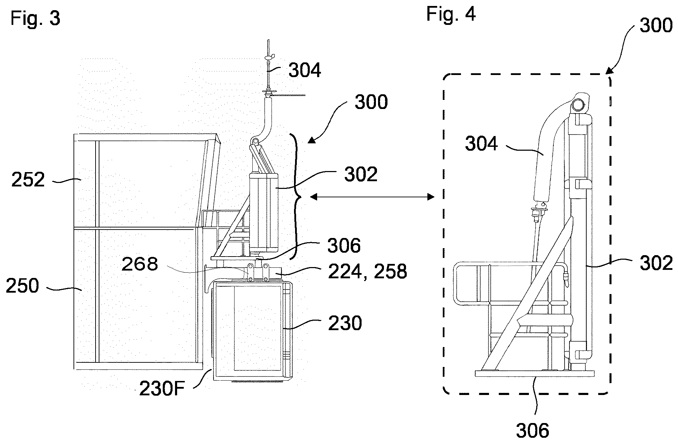

Figure 3 shows, in a side view, a portion of the nacelle 106, i.e., the rear part of the nacelle 106 having, for example, the second nacelle module 250 and the first nacelle module 252 mounted together.

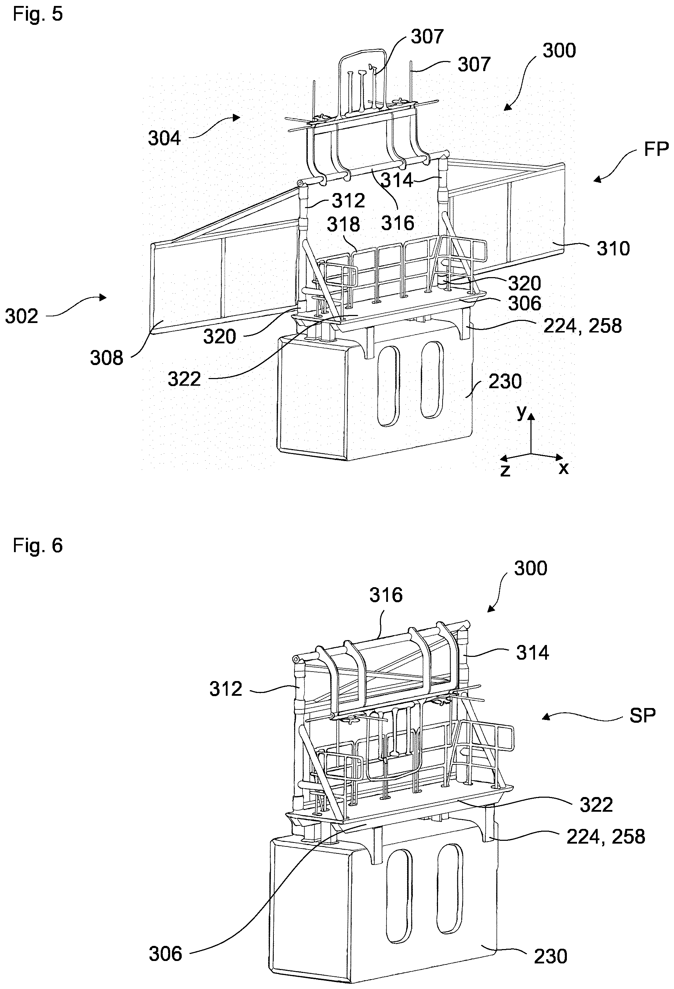

Figures 3 and 4 along with Figures 5 and 6 illustrate a first exemplary configuration of the arrangement according to some embodiments of the disclosure.

Attached at the lower portion of the nacelle 106, e.g., to the second nacelle module 250, is the support structure 224.

In Figure 2 the support structure 224 is attached to the upper nacelle module 252 which shows that both configurations, i.e., attachment of the support structure 224 to both first and second nacelle modules are possible. The support structure 224 supports the third nacelle module 230 on its bottom side as illustrated. The third nacelle module 230 is arranged at least partly behind the second nacelle module 250. Above the support structure 224, an arrangement 300 comprising a cooling module 302 and a sensing module 304 is arranged. The cooling module 302 and the sensing module 304 are supported by the support structure 224. Figure 3 shows the cooling module 302, and the sensing module 304 in an operating position.

The support structure 224, according to one exemplary embodiment, is in the form of one or more beams 258 extending from the trailing end 254 of the nacelle 106, and also beyond the trailing end 254 along the lengthwise direction X, as shown in Figure 3. The one or more beams 258 (alternately referred to as beam 258 type support structure 224) may be structurally supported by, for example, any one or both of the first supporting frame 222 and the second supporting frame 220 which may form part of framework or skeleton of the first and/or the second nacelle modules 252, 250. Alternately, as defined earlier, the supporting frame 260 may be of unitary type which may comprise open type or closed type support.

Considering the example of second nacelle module 250, the beam 258 type support structure 224 to which the third nacelle module 230 as well as the arrangement 300 is attached may simply be an (integral) extension of the supporting frame 260 inside the nacelle 106, for example, an extension of the second supporting frame 220 inside the second nacelle module 250.

In another example, the beam 258 type support structure 224 may simply be attached, e.g., by fastening, welding, etc., to the supporting frame 260 inside the nacelle 106, e.g., to the second supporting frame 220 inside the second nacelle module 250.

The beam 258 type support structure 224 supporting the heavier third nacelle module 230 containing either the power converter or the transformer may be regarded as a cantilever beam arrangement according to an example.

Further, the third nacelle module 230 may be provisioned with connecting elements 268, e.g., clamps, brackets, etc., to attach to the beam 258 of the support structure 224 as illustrated in Figure 3.

The beam 258 may also support a support member 306, for example, a support platform for attaching or supporting the arrangement 300 on top. The support member 306, serving e.g., as a support platform may allow personnel, equipment, machines, tools, etc., to be supported on it for the purpose of installation, removal, replacement, repair, inspection, and so on.

The support member 306 may also be arranged with a pre-tilt or pre-inclination relative to the horizontal plane, e.g., with respect to ground so as to facilitate a stable, safe support to personnel, tools, equipment, etc., during situations like bending of the tower/nacelle, etc.

In another exemplary configuration, the planar orientation of the support member 306 on which the arrangement 300 is mounted may be angularly adjusted with respect to horizontal, e.g., ground to facilitate a stable, safe support to personnel, tools, equipment, etc.

Further, the beam 258 type support structure may be formed integrally with an interface region or an intersection between the first supporting frame 222 and the second supporting frame 220 at the rear end. This way, the loads resulting from the third nacelle module 230 and the arrangement 300 may be distributed between the two supporting frames 222, 220 arranged one above the other (best shown in Figure 2) via the beam 258 type support structure 224.

In other embodiments, other orientations of the beam 258 may be employed. For example, one or more beams extending along widthwise direction Z at the trailing end 254 of the first and/or second nacelle module 252, 250, or at the intersection, may be configured to support the third nacelle module 230 as well as the arrangement 300.

Yet another example is that a cluster or a matrix of interconnected beams resulting in a frame (serving as a planar support structure) and externally connectable to the supporting frame 260 of the nacelle 106 at the rear end may be used to support the arrangement 300 and the third nacelle module 230.

Yet another example is that the support structure 224 is simply in the form of a plate or a platform or a bed that is connected to or integral with the rear end 254, e.g., with the supporting reinforcing structure of the first and/or second nacelle module, or at the reinforcing interface.

A still another example is that the support structure 224 may be in the form of brackets, hooks, clamps, mounts or any other supporting member which may be reinforcingly fixed or fabricated integral with the supporting frame 260. In such a case, the third nacelle module 230 may be attached in a hung/suspended manner from such brackets, hooks, clamps, mounts or any other supporting member, or the front side 230F of the third nacelle module 230 may be directly attached to such brackets, hooks, clamps, mounts or any other supporting member. In an example, four brackets may be used to attach four corner portions of the front side 230F of the third nacelle module 230. The arrangement 300 may be mounted on top of the third nacelle module 230 by any suitable means or mounting arrangement.

The cooling 302 and/or the sensing module 304 of the arrangement 300 may be preinstalled or pre-assembled as one module and could be mounted as one module on the support structure 224.

In Figure 3, the sensing arrangement 304 shows sensors 307 which are oriented in the operating position so that they are directed vertically into the air for sensing parameters, including, but not limited to wind conditions. The sensing module 304 may either be dismantled during a non-operating condition, e.g., transport, lifting, etc., or may be actuated to a non-operating position as shown in Figure 4, which will be explained later.

Figure 4 shows a magnified view of a portion of Figure 3 in which the sensing module 304 is moved to a non-operating position, for example, a position apt for transport, service, etc. In the non-operating position, the sensing module 304 may be seen extending downwards and closer to the support structure 224, such that the sensing module 304 can be easily reached or accessed from the support structure 224. The movable positions of the cooling module 302 and sensing module 304 are explained in more detail with reference to Figures 5 and 6.

Figure 5 shows the cooling and sensing arrangement 300 in a perspective view in which the cooling module 302 and the sensing module 304 are in operating position, and Figure 6 shows the same view as in Figure 5 except that the cooling module 302 and the sensing module 304 are in non-operating position.

The support structure 224 comprises a support member 306, e.g., like a platform, plank, bedframe, etc., extending beyond the trailing end 254 of the nacelle 106, in particular along a lengthwise direction X as well as along a widthwise direction Z of the nacelle (see Figure 3 and Figure 4).

In one example, the support member 306 may be supported by the beam 258 of the support structure 224.

In another example, the support member 306 may be supported directly by the supporting frame 260, for example, by the first and/or the second supporting frame 222, 220.

In another example, the support member 306 may be formed as an integral extension of the supporting frame 260, for example, extending from the first and/or the second supporting frame 222, 220.

In yet another example, the support member 306 may be supported by brackets, hooks, clamps, mounts or any other form of supporting member other than a beam.

According to an example, the support member 306 may have a predominant widthwise dimension in comparison to the lengthwise dimension.

The support member 306 may allow personnel, equipment, machines, tools, facilities, etc., to be supported on it for the purpose of installation, removal, replacement, repair, inspection, and so on.

The cooling module 302 comprises at least one, for example two cooling panels 308 and 310 as shown. The cooling panels 308 and 310 are mounted movably, e.g., pivotably about an essentially vertical axis (perpendicular to the lengthwise direction X) on the support member 306 so that they can be moved between a first position FP as shown in Figure 5 and a second position SP as shown in Figure 6.

According to another configuration, the cooling panels 308, 310 may be mounted slidably on the support member 306, such that they can be slid relative to the lengthwise direction X, e.g., along the widthwise direction Z. An appropriate sliding mechanism (not shown) may facilitate this.

The first position FP of one or both the cooling panels 308 and 310, as shown in Figure 5, may be an operating position, and in this first position FP the cooling panels 308 and 310 extend away from the nacelle 106, e.g., away from the first and second nacelle module 250, 252 along a widthwise direction Z, or at an angle relative to the lengthwise direction X and/or the widthwise direction Z. This means that air which flows besides the nacelle, i.e., adjacent or along the side walls (lateral) of the nacelle 106 may be directed towards the cooling panels 308 and 310 for heat removal.

According to one exemplary configuration, the cooling panels 308 and 310 are capable of being pivotably actuated between angles ranging between -90° and +90° relative to the widthwise direction Z. -90° corresponds to a position where a cooling panel 308, 310 lies adjacent and parallel to a side wall of the nacelle 106 and/or to the lengthwise direction X. +90° corresponds to a position where the cooling panel 308, 310 lies parallel to a side wall of the nacelle 106 and/or to the lengthwise direction X, but extending away from the nacelle 106, i.e., beyond the trailing end 254. The cooling panel 308, 310 can be locked at any desired position within this angular range for operating or non-operating purposes. For example, -90° facilitates inspection, repair, etc., of the cooling panel 308, 310 from a side wall of the nacelle 106, while +90° may facilitate inspection, repair, etc., of the cooling panel 308, 310 from the support member 306.

According to one example, the +90° position may allow inspection, repair, etc., of the cooling panel 308, 310 without having to move the cooling panel 308, 310 all the way towards the trailing end 254.

The second position SP of the cooling panels 308, 310 as shown in Figure 6 is a non-operating position according to an embodiment. This position may be used during certain non-operating conditions, e.g., transport, inspection, hoisting/lowering, service, etc. At this position, the cooling panels 308 and 310 may be moved, for example, folded pivotably such that the cooling panel 308, 310 is located above the support member 306. To move the cooling panels 308 and 310 into the second position SP as shown in Figure 6, they are moved through 180° from the first position FP as shown in Figure 5 pivotably. In case of sliding, the cooling panels 308, 310 may be slidingly retracted inwards from the first position FP as shown in Figure 5 in an opposite direction until the cooling panels 308, 310 are above the support member 306.

According to one exemplary embodiment, one or both the cooling panels 308, 310 in the first position FP as shown in Figure 5 may be pivotably moved or flipped about a horizontal axis perpendicular to the lengthwise direction X, such that the cooling panels 308, 310 may be shifted to a relatively lower position for operation. In such a relatively lower position, the cooling panel 308, 310 may extend along the widthwise direction adjacent to the third nacelle module 230 instead of above the support member 306 as described earlier. An appropriate mechanism (not shown) may facilitate such a pivotable movement about the horizontal axis perpendicular to the lengthwise direction X.

According to one exemplary embodiment, one or both the cooling panels 308, 310 in the first position FP as shown in Figure 5 may be linearly shifted downwards in the vertical direction Y, e.g., for operation, perpendicular to the lengthwise direction X. The linear shift may be facilitated by the at least one post which may also be extended, e.g., telescopically downwards.

Further, the support structure 224 comprises at least one post, e.g., a pair of posts 312 and 314 and a support element 316 attached to the pair of posts 312 and 314 (best shown in Figure 5). The pair of posts 312 and 314 are attached to the support member 306 at a first end, and to a support element 316 at a second end opposite to the first end.

Each post 312, 314 may be configured as an adjustable member, e.g., as a telescopic member which can be telescopically extended or retracted depending on requirement. In another configuration, each post may be provided with suitable mechanism or an arrangement to allow flexibility and freedom of certain motions, e.g., constrained motion. One example is a provision of a hinge mechanism provided in a post which allows the cooling panel 308, 310 to be hinged and pivotably moved about a horizontal axis while constraining other movements, e.g., vertical sliding.

The support structure 224 optionally comprises a railing structure 318 which is arranged on the support member 306 for the purposes of safety, support, etc.

As shown in Figures 3 and 4 and also Figures 5 and 6, the sensing module 304 is movable from an operating position (see Figures 3 and 5) to a non-operating position (see Figure 4 and Figure 6). For moving the sensing module 304 from the operating position to the non-operating position, the sensing module is mounted pivotably to the support element 316, and in this case, the support element 360 rotatably supports the sensing module to be turned between the non-operating position and the operating position.

In the operating position of the sensing module 304 as shown in Figure 3 and Figure 5, the sensing module 304 extends upwards and above a top face (roof) of the nacelle 106, for example, away from the support member 306. The sensing module comprises several sensors 307. In the non-operating position as shown in Figure 4 and Figure 6, the sensing module 304 is turned by nearly 180° downwards, such that the sensing module (304) is accessible, in particular reachable from the supporting member 306.

According to an embodiment, the arrangement 300 may be provisioned with an actuator 320 (not shown) which can be used to adjust at least one of the position and the angle of the cooling panels 308 and 310. For example, the actuator may be a linear actuator that actuates and adjusts the sliding movement i.e., position of the cooling panel relative to lengthwise direction X, e.g., along widthwise direction Z between the first position FP and the second position SP. In another example, the actuator may be a rotary or a linear actuator which facilitates pivotable movement of the panel relative to the axis perpendicular to lengthwise direction X.

The cooling effect may be optimised through this adjustment.

According to an embodiment, the actuator may be interfaced with the control of the wind turbine, e.g., main controller, so that the actuation by the actuator may be regulated based on control signals in response to inputs received by the control. The inputs may be received, for example, by sensors associated with the control and/or the wind turbine components.

In an example, if less cooling capacity is needed, then the cooling panels 308 and 310 can be moved more to the back side so that less cooling capacity is provided. Also, if strong winds are detected by the sensing module 304, the actuator 320 is used to bring the cooling panels 308, 310 into the folded position or at least into a position where damage is avoided. The actuator is also used to bring the cooling panels 308, 310 into the folded position, e.g., second position SP for maintenance. In the second position, the cooling panels 308,310 are parallel or substantially parallel to the rear wall of the nacelle 106.

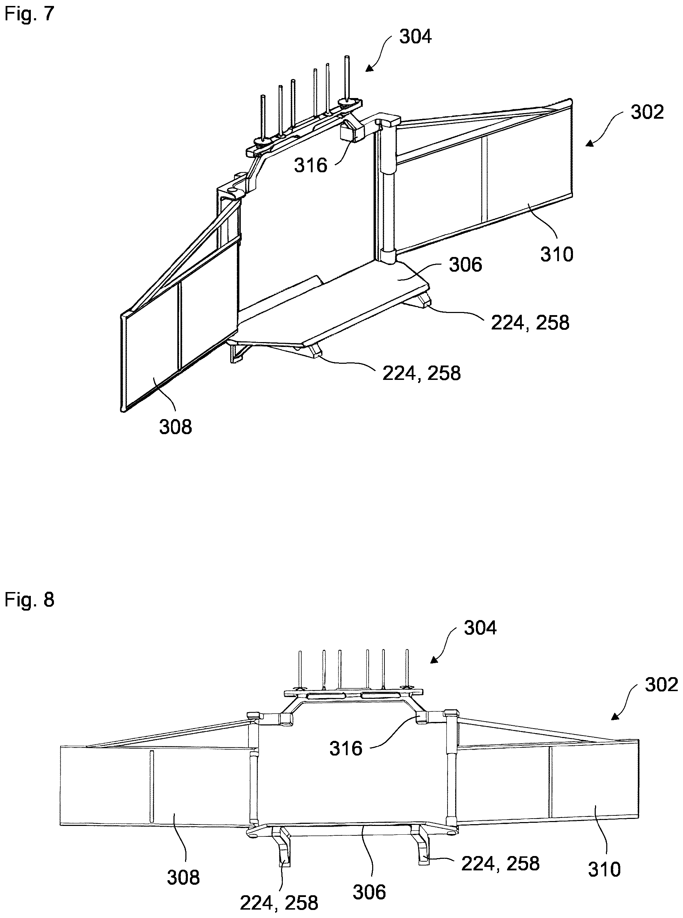

Figures 7 to 12 illustrate a second exemplary configuration of the arrangement according to some embodiments of the disclosure.

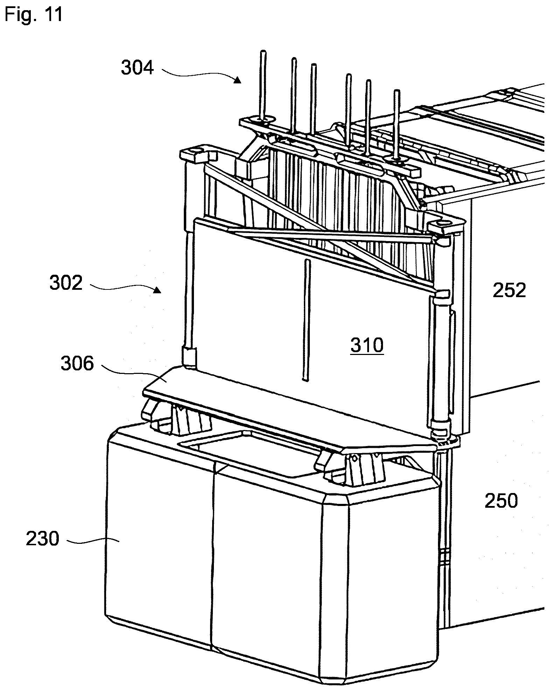

Figures 3 to 6 illustrate the arrangement 300 as positioned away from the nacelle 106 (best shown in Figures 3 and 6) i.e., a distal end on top of the support member 306. On the other hand, Figures 7 to 12 illustrate the arrangement 300 as positioned proximal to the nacelle 106 (best shown in Figure 11).

According to the second exemplary configuration, the cooling panels 308, 310 may facilitate both the operating condition and the non-operating condition at the first position FP, i.e., when cooling panels 308, 310 are unfolded and extended as shown in Figures 7 and 8. To attain this, the arrangement 300 comprises an extension member, e.g., a platform, a plank, a bed frame, etc., (not shown) which may be attached to and supported by the support structure 224, for example, to the support member 306. The extension member may be deployed in a widthwise direction Z or any angle relative to the widthwise direction Z from the support member 306 at the trailing end 254. The extension member serves as a working ground for the workers during installation and service, and may also facilitate movement of equipment, tools, etc.

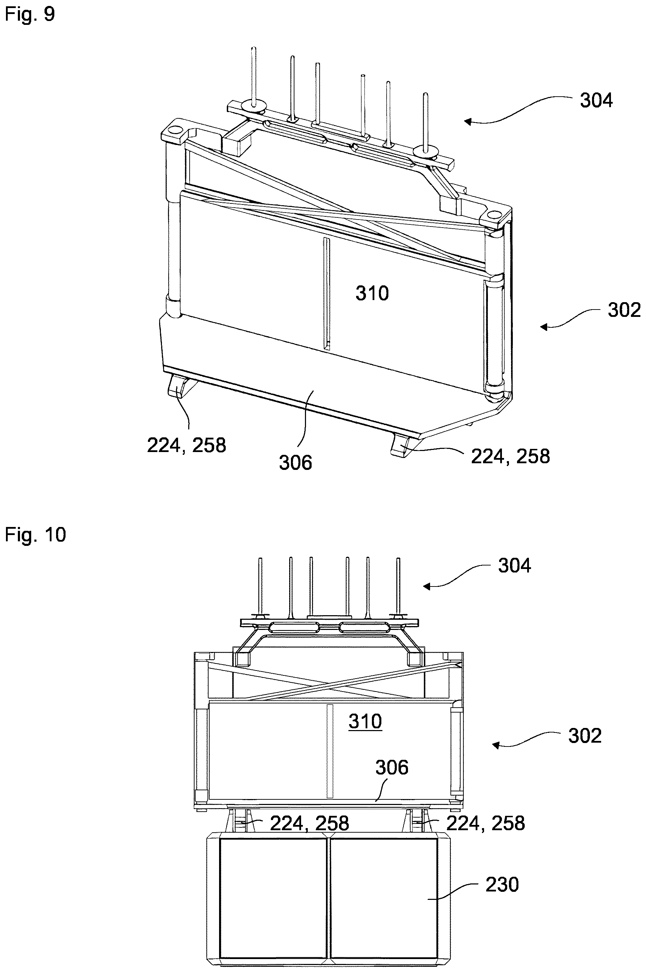

Alternately, as shown in Figures 9 to 11, the cooling panels 308, 310 may be moved to second position SP from the first position FP as described with reference to earlier embodiments.

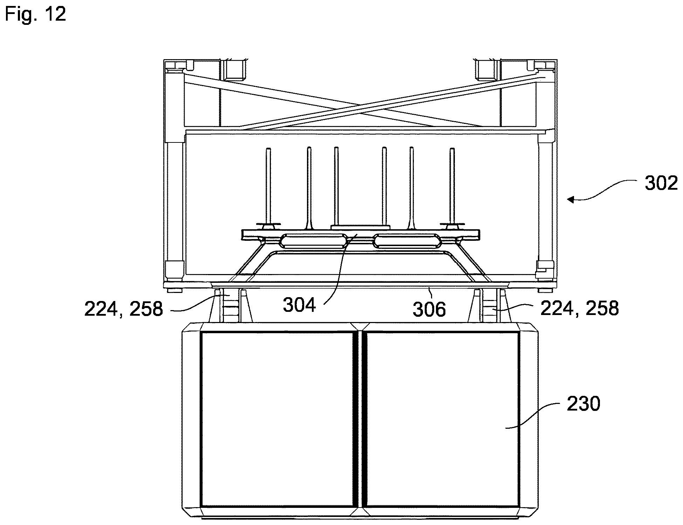

Furthermore, as depicted in Figures 7 to 11, the sensing module 304 may be fixedly connected to the support element 306 for operation. However, during non-operating conditions, e.g., transport, hoisting/lowering, etc., the sensing module 304 may be placed or supported on the support member 306 as depicted in Figure 12.

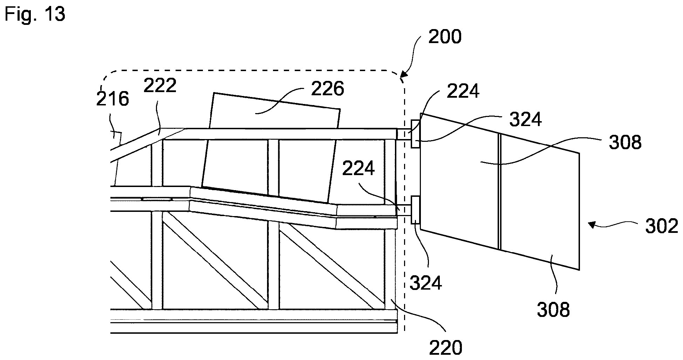

Figure 13 shows an alternative embodiment. In this alternative embodiment a part of the nacelle assembly (without housing) is shown. The second supporting frame 220 is mounted together with the first supporting frame 222 which carries the generator 226 and covers a part of the transmission assembly 210 from which a portion of the gearbox 216 can be partially seen. The support structure 224 for supporting the cooling module and/or the sensing module is attached directly to the first supporting frame 222. For example, the cooling panel 308 is pivotably attached to the support structure 224 which may be in the form of hinges 324, while the sensing module may be fixedly or movably connected to stationary part of the support structure 224.

According to a further aspect of the present disclosure, a first method of installing the arrangement 300 along with the nacelle assembly on top of a tower of the wind turbine is described. The method comprising:
- attaching the arrangement to one of the second nacelle module 250 and the first nacelle module 252 of the nacelle assembly on ground;
- lifting the second nacelle module 250 on top of the tower,
- attaching the second nacelle module 250 to a tower mount of the tower,
- lifting the first nacelle module 252 to a position above the second nacelle module 250,
- attaching the first nacelle module 252 on top of the second nacelle module 250, and
- attaching the third nacelle module 230 to the support structure 224 of the arrangement 300.

At the time of attaching the arrangement to one of the first nacelle module 252 and the second nacelle module 250, the cooling module is in the second position SP and/or the sensing module may be in the non-operating position.

For operation, the method comprises moving the cooling module to the first position FP.

Furthermore, for operation, the method comprises moving the sensing module to the operating position from the non-operating position, or lifting the sensing module supported on the support structure to a position on top of the support element of the support structure, followed by fixing the sensing module to the support element.

According to a further aspect of the present disclosure, a second method of installing the arrangement 300 along with the nacelle assembly on top of a tower of the wind turbine is described. The method comprising:
- lifting the second nacelle module 250 on top of the tower,
- attaching the second nacelle module 250 to a tower mount of the tower,
- lifting the first nacelle module 252 to a position above the second nacelle module 250,
- attaching the first nacelle module 252 on top of the second nacelle module 250,
- attaching the third nacelle module 230 to the support structure 224 of the arrangement 300 on the ground;
- lifting the arrangement 300 together with the third nacelle module 230 to a position above the tower mount and proximal to the trailing end 254;
- attaching the arrangement 300 together with the third nacelle module 230 to at least one of the second nacelle module 250, the first nacelle module 252, and the intersection between the first and the second nacelle modules 252, 250 at the trailing end 254.

According to a further aspect of the present disclosure, a third method of installing the arrangement 300 along with the nacelle assembly on top of a tower of the wind turbine is described. The method comprising:
- attaching the first nacelle module 252 on top of the second nacelle module 250 on the ground;
- lifting the second nacelle module 250 together with the first nacelle module 252 on top of the tower,
- attaching the second nacelle module 250 to a tower mount of the tower,
- lifting the arrangement 300 to a position above the tower mount and proximal to the trailing end 254; and
- attaching the arrangement 300 to at least one of the second nacelle module 250, the first nacelle module 252, and the intersection between the first and the second nacelle modules 252, 250 at the trailing end 254.

According to an aspect, the third method further comprises attaching the third nacelle module 230 to the support structure 224 of the arrangement 300 on the ground before lifting the arrangement 300, or after attaching the arrangement 300 to at least one of the second nacelle module 250, the first nacelle module 252, and the intersection between the first and the second nacelle modules 252, 250 at the trailing end 254.

### List of reference signs

- 100: wind turbine
- 102: tower
- 104: foundation
- 106: nacelle
- 108: rotor
- 110: rotor blade
- 112: rotor hub
- 200: assembly/support assembly
- 202: main frame
- 204: closed wall of the main frame
- 206: opening
- 208: inclined surface
- 210: transmission assembly
- 212: main bearing unit
- 214: gearbox
- 216: part of gearbox
- 218: main frame connecting structure
- 220: second supporting frame
- 222: first supporting frame
- 224: support structure
- 226: generator
- 228: other components
- 230: additional or third nacelle module
- 230F: front side of the third nacelle module
- 232: connecting portion
- 234: upper supporting portion
- 236: lower supporting portion
- 238: connection means
- 240: side frames
- 242: second enclosure
- 244: second side frames
- 246: first enclosure
- 248: interconnected beams
- 250: second nacelle module
- 252: first nacelle module
- 254: trailing end of the nacelle
- 258: beam of the support structure
- 260: supporting frame
- 268: connecting elements
- 300: arrangement
- 302: cooling module
- 304: sensing module
- 306: support member
- 307: sensors
- 308: cooling panel
- 310: cooling panel
- 312: post
- 314: post
- 316: support element
- 318: railing structure
- 320: actuator
- 324: hinges
- X: Lengthwise direction
- Y: Vertical direction
- Z: widthwise direction
- FP: first position
- SP: second position

## Claims

1. An arrangement (300) for a wind turbine (100) having a nacelle (106), the arrangement comprising:
- a support structure (224) configured to be attached to a trailing end (254) of the nacelle (106) opposite to a rotor (108) of the wind turbine (100), and
- at least one of a cooling module (302) and a sensing module (304) configured to be supported by the support structure (224).

2. The arrangement according to claim 1, wherein the support structure (224) comprises:
- a support member (306) configured to extend beyond the trailing end (254) of the nacelle (106), in particular along a lengthwise direction (X) of the nacelle (106).

3. The arrangement according to claim 2, wherein the cooling module (302) comprises at least one cooling panel (308,310) supported by the support member (306) such that the at least one cooling panel (308,310) is movable between a first position (FP) and a second position (SP), in particular at least one of:
• pivotable about an axis perpendicular to the lengthwise direction (X) of the nacelle (106), and
• slidable relative to the lengthwise direction (X) of the nacelle (106).

4. The arrangement according to claim 3, wherein:
- the first position (FP) is an operating position of the cooling module (302), wherein, in the first position (FP), the at least one cooling panel (308,310) extends at an angle, in particular perpendicular, relative to the lengthwise direction (X), in particular in a widthwise direction (Z), and away from at least one of the nacelle (106) and the support member (306).

5. The arrangement according to claim 3 or 4, wherein:
- the second position (SP) is a non-operating position of the cooling module (302), wherein, in the second position, the at least one cooling panel (308,310) is located above the support member (306).

6. The arrangement according to any one of the preceding claims, wherein the support structure (224) further comprises:
- at least one post, in particular at least two posts (312, 314), supported on the support member (306) at a first end, and
- a support element (316) attached to the at least one post at a second end opposite to the first end.

7. The arrangement according to claim 6, wherein the sensing module (304) is mounted to one of the support element (316) and the support member (306).

8. The arrangement according to any one of the preceding claims, wherein the sensing module (304) is movable between an operating position and a non-operating position.

9. The arrangement according to claim 8, wherein:
- in the operating position of the sensing module (304), the sensing module extends above a top face of the nacelle (106), and
- in the non-operating position of the sensing module (304), the sensing module (304) is accessible, in particular reachable to a person.

10. The arrangement according to any of the preceding claims, wherein the support structure (224) is configured to support an additional nacelle module (230), wherein the additional nacelle module (230) is configured to be fixed below the support structure (224).

11. The arrangement according to any of the preceding claims, wherein the arrangement comprises an actuator (320) configured to adjust at least one of a position and an angle of the at least one cooling panel (308, 310) relative to the nacelle (106).

12. The arrangement according to claim 1, wherein the arrangement comprises an extension member.

13. A nacelle assembly for a wind turbine, the nacelle
assembly comprising:
- a first nacelle module (252) comprising a first supporting frame (222), and
- a second nacelle module (250) comprising a second supporting frame (220),
- wherein the first nacelle module (252) and
the second nacelle module (250) are separate modules,
- an arrangement (300) according to any of the claims 1-12, and
- a third nacelle module (230) attached to the support structure (224) of the arrangement (300), and located outside the first nacelle module (252) and the second nacelle module (250) and adjacent to the trailing end (254) of the nacelle (106),
- wherein, in an operational state of the wind turbine (100), the second nacelle module (250) is attached beneath the first nacelle module (252) and to the first nacelle module (252).

14. The nacelle assembly according to claim 13, wherein the first nacelle module (252) is configured to accommodate at least partly a transmission assembly (210) and an electric generator (226) of the wind turbine (100), and
- wherein the second nacelle module (250) is configured to accommodate at least one other component (228), in particular an electrical component, of the wind turbine (100).

15. A nacelle assembly according to claim 13 or 14, wherein:
- the cooling module (302) is mounted to one of the first supporting frame (222) and the second supporting frame (220), such that the cooling module (302) is movable between the first position (FP) and the second position (SP), and/or
- the sensing module (304) is mounted to the first supporting frame (222), such that the sensing module (304) is movable between the operating position and the non-operating position.
